Europäisches Patentamt

European Patent Office

Office européen des brevets

(11) Veröffentlichungsnummer: **0 361 133**

**A1**

(12) **EUROPÄISCHE PATENTANMELDUNG**

(21) Anmeldenummer: **89116278.6**

(22) Anmeldetag: **04.09.89**

(51) Int. Cl.5 **F16L 55/10 , B21D 41/04**

(30) Priorität: **14.09.88 CH 3424/88**

(43) Veröffentlichungstag der Anmeldung:
**04.04.90 Patentblatt 90/14**

(84) Benannte Vertragsstaaten:
**AT BE DE ES FR GB IT NL**

(71) Anmelder: **Fael S.A.**
**17, rue de la Musinière**
**CH-2072 Saint-Blaise(CH)**

(72) Erfinder: **Schreiber, Peter**
**Tannenweg 10**
**CH-2563 Ipsach(CH)**
Erfinder: **Jobin, Georges-Fernand**
**Ch. des Villarets 4**
**CH-2036 Cormondrèche(CH)**

(74) Vertreter: **Scheidegger, Werner & Co.**
**Stampfenbachstrasse 48 Postfach**
**CH-8023 Zürich(CH)**

(54) Verfahren und Vorrichtung zum dichten Verschliessen eines Rohrendes.

㉗ Zum Verschliessen eines Rohrs (3) am Rohrende wird der untere Rohrumfangsteil (3a″) in einem Formwerkzeug (1) abgestützt gehalten und der obenliegende nicht abgestützte Rohrumfangsteil (3a′) mittels eines in dem Formwerkzeug geführten Formstempels (8) einwärtsgedrückt. Der Formstempel (8) ist schmäler als der Rohrdurchmesser und hat eine parallel zur Rohrachse sich längs erstreckende Form mit einer konvex gewölbten Druckfläche (10), die zusätzlich zum Rohrende hin schräg nach unten geneigt ausgebildet ist. Durch das Niederdrücken des Formstempels (8) entstehen zu beiden Seiten von ihm Längsfalten (14) in der Rohrwand und dazwischen eine von dem niedergedrückten Rohrumfangsteil gebildete, schräg zur Rohrachse von der oberen zur unteren Seite des Rohrs sich erstreckende Rinne (12). Der einwärtsgedrückte und der abgestützte Rohrumfangsteil werden am unteren Ende der Rinne längs einer mindestens linienförmigen Berührungszone miteinander verschweisst.

Fig. 1

## Verfahren und Vorrichtung zum dichten Verschliessen eines Rohrendes

Um Rohre an ihren Enden zu verschliessen, ist es bekannt, passende Kappen oder Deckel an den Rohrenden festzuschweissen oder auch in die Rohrenden hinein passende Teile festzuschweissen. Häufig werden Rohre mit unrundem Querschnitt gebraucht, beispielsweise werden für die Herstellung von Heizkörpern heute grösstenteils Flachrohre verwendet, die zur Herstellung eines Heizkörpers parallel nebeneinander angeordnet an Sammelrohre angeschlossen werden. Man benötigt also dazu eine Mehrzahl von Rohren einer bestimmten Länge, die an beiden Enden geschlossen sind. Das Zuschweissen unter Verwendung von Deckeln oder ähnlichem ist eine aufwendige Arbeit, zu der auch noch das nachträgliche Schleifen der Schweissnaht hinzukommt, worauf man meistens nicht verzichten kann, wenn das Endprodukt ansprechend aussehen soll. Zur Erzielung einer rationelleren Fertigung sind daher verschiedene andere Vorschläge gemacht worden, man hat beispielsweise bei Flachrohren die breiten Seitenflächen zur Mitte umgelegt und verschweisst, oder man hat die Stirnenden von Flachrohren unter Anwendung von Bördelrollen umgelegt und dann zugeschweisst. Dies ist für Flachrohre eine geeignete Methode, die aber für andere Rohrquerschnittsformen nicht mehr anwendbar ist. Rohre können jedoch alle möglichen Querschnittsformen aufweisen und in grosser Stückzahl für die Herstellung von Radiatoren oder anderen unter Verwendung von Rohren hergestellten Erzeugnissen benötigt werden, wobei der Querschnitt kreisförmig oder halbkreisförmig, ferner kreis sektorförmig oder dreieckförmig oder auch hutförmig mit zwei zusammengedrückten Rohrlängsrändern und schliesslich flachoval sein kann oder auch noch eine von diesen abweichende andere Querschnittsform besitzen kann.

Der Erfindung lag daher die Aufgabe zugrunde, für jede beliebige Rohrquerschnittsform, die symmetrisch ist, ein Verfahren zum dichten Verschliessen des Rohrendes anzugeben, das mit einfachen Mitteln und geringem Kostenaufwand anwendbar ist, wobei jede Nacharbeit durch Schleifen oder ähnliches entfällt und ein ästhetisch vollbefriedigendes Ergebnis erzielt wird, zumal die Rohre von einer Seite aus die an ihnen zur Anwendung kommende Methode zum Rohrverschliessen nicht erkennen lassen.

Zur Lösung dieser Aufgaben dienen bei dem erfindungsgemässen Verfahren die Massnahmen nach Anspruch 1. Bei dem Verschliessen des Rohrs unter Verwendung eines Formstempels lässt sich mit Vorteil gleichzeitig auch noch ein Schnittstempel zum Einsatz bringen, der durch Wegschneiden des verdrückten Endabschnitts des Rohrs eine gerade und sauber bearbeitet aussehende Endkante des Rohrs entstehen lässt. Es kann daher mit Vorteil ein zweiteiliger Formstempel verwendet werden, von welchem ein relativ beweglicher Teil weiter niederdrückbar ist, um einen Endabschnitt des Rohrs abzutrennen.

Die erfindungsgemässe Vorrichtung zur Durchführung des Verfahrens weist die im Anspruch 5 angeführten Merkmale auf.

Die Erfindung betrifft ferner Rohre mit gemäss dem Verfahren verschlossenen Rohrenden, wobei die Rohre jeden beliebigen Querschnitt aufweisen können, sofern er sich auf einer Mittelsymmetrielinie zusammendrücken lässt. Dies trifft für im Querschnitt kreisförmige oder halbkreisförmige wie auch für kreissegmentförmige oder kreissektorförmige, ferner für dreieckförmige und flache rechteckförmige Rohrquerschnitte unter anderem zu.

Mit den in erfindungsgemässer Weise verschlossenen Rohren lassen sich in sehr rationeller Methode Gegenstände mit einer Mehrzahl derartiger Rohre wie beispielsweise Radiatoren herstellen.

Die Erfindung wird nachfolgend anhand der Zeichnungen, die Ausführungsbeispiele zeigen, näher erläutert. Es zeigen:

Fig. 1 - 3 schematisch das Formwerkzeug zum Verschliessen eines Rohres mit kreisförmigem Querschnitt in Vorderansicht, Seitenansicht und Draufsicht;

Fig. 4 das verschlossene Rohrende in Seitenansicht;

Fig. 5 eine Vorderansicht des Rohrs gemäss Fig. 4;

Fig. 6 das verschlossene Rohr schaubildlich dargestellt;

Fig. 7 und 8 Vorderansicht und Seitenansicht eines verschlossenen Flachrohrs;

Fig. 9 und 10 Vorderansicht und Seitenansicht eines Rohrs mit Hutquerschnitt;

Fig. 11 und 12 Vorderansicht und Seitenansicht eines verschlossenen, im Querschnitt dreieckförmigen Rohrs;

Fig.13 eine Reihe weiterer Querschnittsformen von nach dem Verfahren verschliessbaren Rohren.

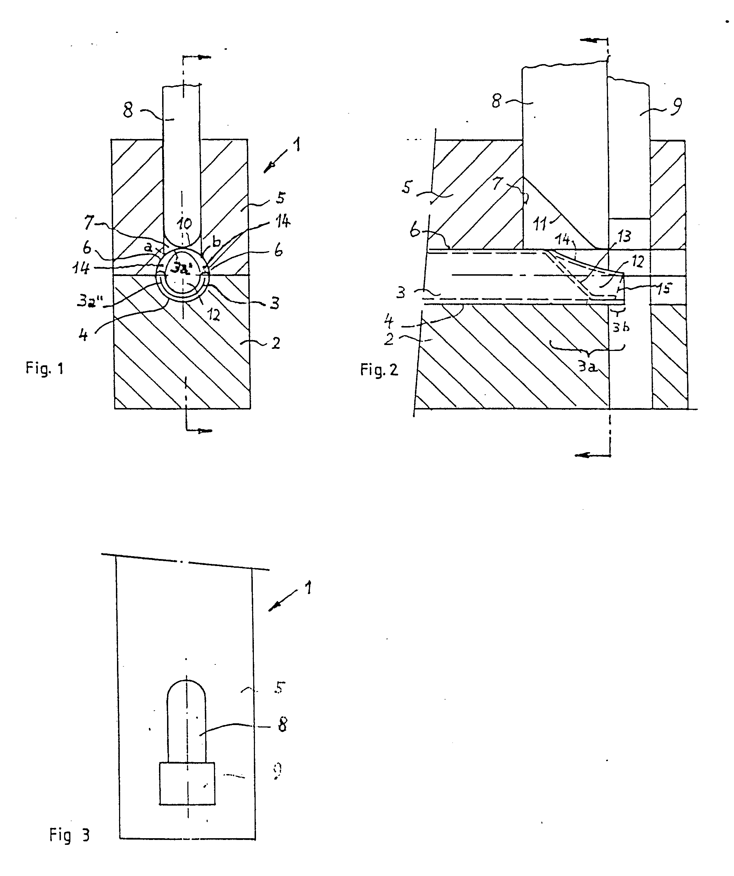

Gemäss Fig. 1 bis 3 weist das Formwerkzeug 1 in einem Unterteil 2 eine dem zu verformenden Rohr 3 entsprechend geformte Ausnehmung 4 auf, die bei dem Rohr mit kreisförmigen Querschnitt kreisbogenförmig und in dem Unterteil sich längserstreckend ausgebildet ist. In der durch die Achse des Rohrs 3 verlaufenden Trennungsebene liegt ein Oberteil 5 des Formwerkzeugs 1 auf dem Unterteil 2 auf, in welchem ebenfalls eine kreisbogenförmige Ausnehmung 6 entsprechend dem Querschnitt des Rohrs 3 ausgebildet ist.

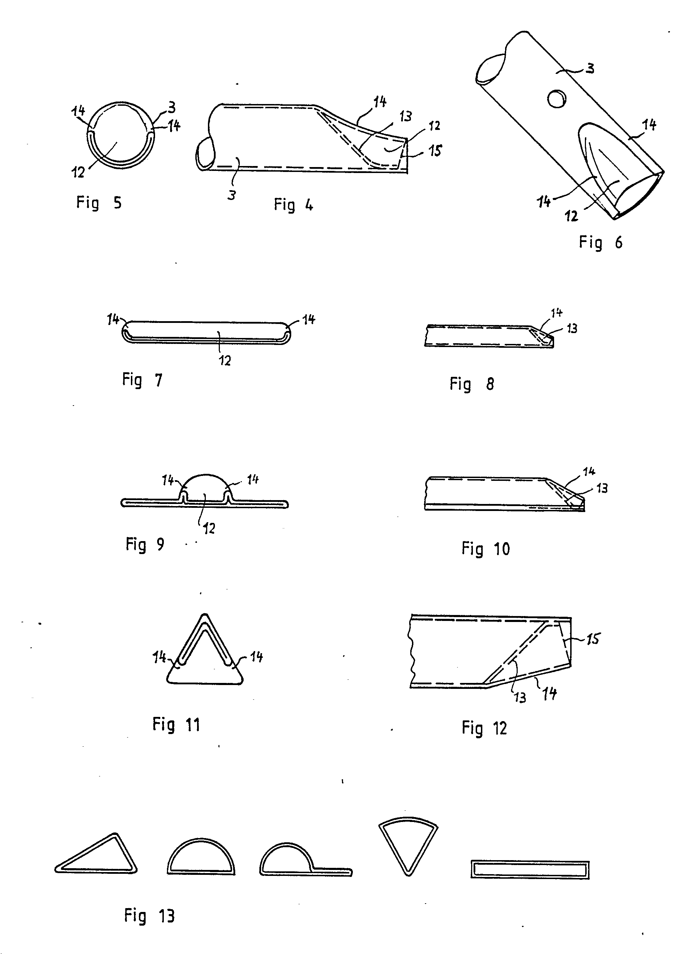

In dem Oberteil 5 des Formwerkzeugs 1 ist ferner eine von der Oberseite des Oberteils 5 senkrecht sich hineinerstreckende und in der Ausnehmung 6 mündende schachtförmige Aussparung 7 ausgebildet. Gemäss Fig. 1 ist diese Aussparung schmäler als der Durchmesser des zu verformenden Rohrs 3 und sie erstreckt sich gemäss Fig. 2 vom rechten Rand des Oberteils 5 in diesen über einen Bereich hinein, in welchem ein in der Aussparung 7 auf-und abbeweglicher Formstempel 8 auf die freiliegende Oberfläche des im Formwerkzeug 1 befindlichen Rohrs, das heisst auf den nicht abgestützten Rohrumfangsteil 3a′ zwischen den Punkten a und b in Fig. 1 einen zur Rohrverformung führenden Druck ausübt, wobei der Rohrendbereich 3a des Rohrs 3 (Fig. 2), der unterhalb des Formstempels 8 und eines unmittelbar daneben befindlichen Schnittstempels 9 liegt, in seinem zwischen den Punkten a und b unteren Rohrumfangsteil 3a″ abgestützt ist. Der Formstempel 8 hat unten eine konvex gewölbte Druckfläche, wobei die in Fig. 2 erkennbare Konturlinie oder Scheitellinie 11 dieser Druckfläche 10 abgewinkelt mit sich ändernder Steigung und generell schräg zur Bewegungsrichtung des Formstempels 8 verläuft, sodass durch diese Druckfläche 10 des Formstempels in dem durch Einwärtsdrücken eines Rohrwandteils verformten Rohr eine zum Rohrende hin abwärtsgeneigte Rinne 12 entsteht, von welcher die in Fig. 2 in Seitenansicht erkennbare Rinnengrundlinie 13 die Rohrachse schräg kreuzt. Beim Einwärtsdrücken des Rohrwandteils kommt es links und rechts vom Formstempel 8 zur Bildung von 2 Falten 14 in der Rohrwand und am Ende des Verformungsvorgangs liegen der abgestützte Rohrumfangsteil und der einwärts gedrückte Rohrumfangsteil längs mindestens einer linienförmigen Berührungszone 15, die bogenförmig verläuft, gegeneinander und können mittels Schweissung verbunden werden. Diese Verbindung kann mittels Widerstandsschweissung oder Laser-Schweissung oder auch durch Anwendung des TIG-Schweissverfahrens unter Schutzgasanwendung erfolgen. Aus Fig. 6 geht am deutlichsten hervor, dass die durch den Verformungsvorgang entstehende Rinne 12 sich von einem in dem Formwerkzeug oben liegenden Bereich des Rohrs schräg abwärts bis zur untenliegenden Rohrendkante erstreckt.

Bei dem Verformungsvorgang wird das einwärtsgedrückte Rohrwandmaterial in bezug auf das Rohrende einwärts zurückgezogen, sodass der unterste Punkt der Berührungslinie 15 zwischen den beiden Rohrumfangsteilen einwärts vom Rohrende liegt. Wenn daher aus ästhetischen Gründen noch ein sauber nachgeschnittenes Rohrende verlangt wird, wird mittels des neben dem Formstempel 8 angeordneten Schnittstempels 9 ein Rohrendabschnitt 3b abgetrennt. Der Schnittstempel 9 ist relativ zu dem Formstempel 8 bewegbar und lässt sich zwecks Abtrennen eines Endabschnitts 3b vom Rohr weiter herunterdrücken als der Formstempel 8. Als Alternativlösung kann auch ein zweiteiliger Stempel derart ausgebildet sein, dass er einen relativ zu einem ersten die konvex gewölbte Druckfläche 10 aufweisenden Formstempelteil 8 beweglichen und als Schnittstempel 9 weiter niederdrückbaren zweiten Stempelteil umfasst.

Ein in Anwendung des Verfahrens mittels der vorstehend beschriebenen Vorrichtung am Rohrende verschlossenes Rohr ist dadurch gekennzeichnet, dass im Rohrendbereich 3a ein unter Bildung von zwei Längsfalten 14 in der Rohrwand schräg einwärtsgedrückter Rohrumfangsteil 3a′ eine die Rohrachse schräg kreuzende Rinne 12 bildet und längs einer mindestens linienförmigen Berührungszone 15 gegen den übrigen unveränderten Rohrumfangsteil 3a″ anliegt und mit diesem mittels Schweissung verbunden ist. Ein derart verschlossenes Rohr kann sehr unterschiedliche Querschnittsformen aufweisen, von denen einige Beispiele in den Fig. 7 bis 12 im Endzustand nach dem Verschliessen dargestellt sind. Bei einem Flachrohr gemäss Fig. 7 und 8 wird die Breitseite einwärtsgedrückt. Fig. 7 zeigt die Stirnansicht und Fig. 8 das Rohrende in Seitenansicht. Ein zwischen zusammengedrückten Längsrändern einen halbkreisförmigen Querschnitt aufweisendes Rohr mit Hutquerschnitt ist im Endzustand in Fig. 9 und 10 dargestellt. Bei einem im Querschnitt dreieckförmigen Rohr gemäss Fig. 11 und 12 wird die einer im Formwerkzeug untenliegenden Ecke des Dreiecks gegen überliegende Dreieckseite einwärtsgedrückt.

Rohre mit zwei nach dem erfindungsgemässen Verfahren verschlossenen Rohrenden werden in bevorzugter Weise zur Herstellung von Heizungs-Radiatoren verwendet. Radiatoren dieser Art weisen eine Mehrzahl von parallel zueinander angeordneten Rohren auf, die je an ein Sammelrohr für Vor- und Rücklauf angeschlossen sind. Die Herstellung dieser Radiatoren ist rationell und kostengünstig, weil die Rohre nur abgelängt werden und dann im Abstand von jedem Rohrende ein Loch für die Verbindung zu den Sammelrohren gestanzt wird, woraufhin jedes Rohr an beiden Rohrenden nach dem erfindungsgemässen Verfahren verschlossen wird. Diese Rohre werden dann parallel zueinander mit quer dazu angeordneten und bei den Löchern Anschluss-Verbindungen aufweisenden Sammelrohren verschweisst.

## Ansprüche

1. Verfahren zum dichten Verschliessen eines Rohrendes, dadurch gekennzeichnet, dass ein Rohrendbereich (3a) des stirnseitig offenen Rohrs (3) in einem das Rohr (3) über einen Teil (3a") des Umfangs abstützenden Formwerkzeug (1) gehalten und der nicht abgestützte Rohrumfangsteil (3a') des Rohrendbereichs (3a) mittels eines dem Abstützbereich mittig gegenüberliegend beweglich geführten Formstempels (8) durch dessen konvex gewölbte Druckfläche (10) unter Bildung einer die Rohrachse winklich kreuzenden Rinne (12) einwärts bis zur Faltung (14) der Rohrwand zu beiden Seiten des Formstempels (8) und mindestens linienförmiger gegenseitiger Anlage (15) der beiden Rohrumfangsteile (3a', 3a") gedrückt wird, welche nachfolgend verschweisst werden.

2. Verfahren nach Anspruch 1, dadurch gekennzeichnet, dass der Formstempel (8) im Abstand einwärts von der Rohrendkante gegen den nicht abgestützten Rohrumfangsteil (3a') niedergedrückt wird und dass von dem derart verformten Rohr (3) der diesem Abstand entsprechende Rohrendabschnitt (3b) mittels eines zum Formstempel (8) benachbart angeordneten Schnittstempels (9) abgetrennt wird.

3. Verfahren nach Anspruch 1 und 2, dadurch gekennzeichnet, dass der nicht abgestützte Rohrumfangsteil (3a') mittels eines zweiteiligen Formstempels (8,9) einwärts gedrückt wird, welcher relativ zu einem ersten die konvex gewölbte Druckfläche (10) aufweisenden Formstempelteil (8) beweglichen und als Schnittstempel (9) weiter niederdrückbaren zweiten Stempelteil (9) umfasst, mittels welchem von dem verformten Rohr (3) ein Endabschnitt (3b) abgetrennt wird.

4. Verfahren nach Anspruch 1, dadurch gekennzeichnet, dass das Verformen durch Einwärtsdrücken des nicht abgestützten Rohrumfangsteils (3a') in einer oder mehreren Stufen erfolgt.

5. Vorrichtung zur Durchführung des Verfahrens nach Anspruch 1, dadurch gekennzeichnet, dass in einem Formwerkzeug (1) eine dem Querschnitt des zu verformenden Rohrs (3) entsprechend geformte, sich längserstreckende Ausnehmung (4,6) ausgebildet ist, die die Abstützung für einen mindestens bis zu der die Rohrachse enthaltenden Mittelebene sich erstreckenden Rohrumfangsteil (3a") des zu verformenden Rohrs (3) bildet, und in dem Formwerkzeug (1) ferner ein Formstempel (8) zentrisch zur Ausnehmung (4) geführt ist, der unterseitig eine konvex gewölbte Druckfläche (10) mit schräg zur Bewegungsrichtung des Formstempels (8) verlaufender Konturlinie (11) zur Erzeugung einer Rinne (12) im Rohr (3) mit die Rohrachse schräg kreuzender Rinnen-Grundlinie (13) aufweist.

6. Vorrichtung nach Anspruch 5, dadurch gekennzeichnet, dass der Formstempel (8,9) zweiteilig ausgebildet ist und einen relativ zu einem ersten die konvex gewölbte Druckfläche (10) aufweisenden Formstempelteil (8) beweglichen und als Schnittstempel weiter niederdrückbaren zweiten Stempelteil (9) zum Abtrennen eines verformten schmalen Rohrendabschnitts (3b) umfasst.

7. Rohr mit verschlossenem Rohrende, hergestellt nach dem Verfahren gemäss Anspruch 1, dadurch gekennzeichnet, dass im Rohrendbereich (3a) ein unter Bildung von zwei Längsfalten (14) in der Rohrwand schräg einwärts gedrückter Rohrumfangsteil (3a') eine die Rohrachse schräg kreuzende Rinne (12) bildet und längs einer mindestens linienförmigen Berührungszone (15) gegen den übrigen formunveränderten Rohrumfangsteil (3a") anliegt und mit diesem mittels Schweissung verbunden ist.

8. Verwendung des Rohres nach Anspruch 7 für die Herstellung von Heizungs-Radiatoren, dadurch gekennzeichnet, dass eine Mehrzahl von gleich langen Rohren (3), in denen jeweils im Abstand von jedem der beiden Rohrenden ein Loch für den Anschluss an jeweils ein Sammelrohr ausgebildet ist, an beiden Rohrenden in dem an das Loch anschliessenden Rohrendbereich (3a) durch je einen schräg einwärts gedrückten Rohrumfangsteil (3a') verschlossen sind und parallel zu einander angeordnet mit den Sammelrohren verschweisst sind.

Fig. 1

Fig. 2

Fig 3

EP 0 361 133 A1

Fig 5

Fig 4

Fig 6

Fig 7

Fig 8

Fig 9

Fig 10

Fig 11

Fig 12

Fig 13

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| Y | US-A-3 078 904  (BISHOP) <br> * Spalte 1, Zeile 68 - Spalte 2, Zeile 34; Figur 1 * | 1 | F 16 L  55/10 <br> B 21 D  41/04 |
| A | | 2-4 | |
| Y | US-A-2 568 911  (COX) <br> * Spalte 1, Zeile 33 - Spalte 2, Zeile 22; Figuren * | 1 | |
| A | | 2-4 | |
| A | US-A-3 444 348  (GOODMAN) <br> * Spalte 3, Zeilen 4-24; Figuren * | 1-4 | |
| A | EP-A-0 261 294  (PAVESE) <br> * Zusammenfassung; Figuren * | 1-4 | |

RECHERCHIERTE SACHGEBIETE (Int. Cl.5)

F 16 L
B 21 D

Der vorliegende Recherchenbericht wurde für alle Patentansprüche erstellt

| Recherchenort | Abschlußdatum der Recherche | Prüfer |
|---|---|---|
| DEN HAAG | 19-12-1989 | HUBEAU M.G. |